# EUROPEAN PATENT APPLICATION

(11) **EP 4 095 109 A2**
(43) Date of publication of application: **30.11.2022**
(21) Application number: 22163041.1
(22) Date of filing: 18.03.2022
(51) Int. Cl.: C03C 17/00, C03C 17/34, C03C 17/42

(54) **ARTICLE WITH AN OPTICAL SURFACE WITH ENGINEERED FUNCTIONS**

(30) Priority: 19.03.2021 US 202163163436 P
(71) Applicant: Viavi Solutions Inc., Chandler, AZ 85286 (US)
(72) Inventor: SEYDEL, Johannes P., Petaluma, 94952 (US); ZIEBA, Jaroslaw, Santa Rosa, 95405 (US); LIANG, Kangning, Santa Rosa, 95404 (US)
(74) Representative: Murgitroyd & Company

(57) **Abstract**

An article including a coating including a plurality of particles dispersed in a host material; and a plurality of optical elements embedded on a surface of the coating is disclosed. A method of making the coating, and the article is disclosed.

## Description

### RELATED APPLICATIONS

This application claims priority to U.S. Provisional Application No. 63/163,436, filed March 19, 2021, the entire disclosure of which is hereby incorporated by reference.

### FIELD OF THE INVENTION

The present disclosure generally relates to an article including a coating including a plurality of particles dispersed in a host material; and a plurality of optical elements embedded on a surface of the coating. A method of making the coating, and the article is disclosed.

### BACKGROUND OF THE INVENTION

Optical devices can include a coating to provide optical feature to the device and/or physically protect the optical device from the environment. However, a single coating is not likely to provide both optical and physical features to the optical device because the materials used in an optical coating may not provide the requisite properties needed in a physical coating. For example, a scratch resistance coating is frequently hard, yet brittle, and would not provide impact resistance. An impact resistance coating is frequently pliable, yet is also likely to scratch. In particular, glass or inorganic solids sensor devices are not impact resistance and shatter easily because of the high hardness and low energy absorbing properties when impacted. Conversely, polymer sensor devices are impact resistant but do not exhibit abrasion resistance.

What is needed is a coating, such as a single coating, that can be engineered to provide specific functions with components representing different ends of a scale. The coating can be engineered to create unique optical, mechanical, chemical, and biological performance. The combination of components, such as discreet elements and host materials, can include the opposite ends of a scale relating to dimension, hardness, aspect ratio, and/or structural shape.

### BRIEF DESCRIPTION OF THE DRAWINGS

Features of the present disclosure are illustrated by way of example and not limited in the following figure(s), in which like numerals indicate like elements, in which:
FIG. 1 is an article including a coating, and a plurality of optical elements according to an aspect of the invention;
FIG. 2 is an article including a coating, and a plurality of optical elements according to another aspect of the invention;
FIG. 3 is an article including a coating, and a plurality of optical elements according to another aspect of the invention;
FIG. 4 is an article including a coating, and a plurality of optical elements according to an aspect of the invention;
FIG. 5 is an article including a coating, and a plurality of optical elements according to an aspect of the invention;
FIG. 6 is an article including a coating, and a plurality of optical elements according to an aspect of the invention; and
FIG. 7 is a graph illustrating the optical performance of a coating according to an aspect of the invention.

### SUMMARY OF THE INVENTION

In an aspect, there is disclosed an article, including a coating including a plurality of particles dispersed in a host material; and a plurality of optical elements embedded on a surface of the coating.

The article may further comprise a substrate, wherein the coating is on a surface of the substrate. The substrate may be chosen from a display, a sensor (glass, inorganic solids, polymer), sensor window, viewport, and a diffuser.

The plurality of particles may have an average particle size ranging in the nanometers. The plurality of optical elements may have a size ranging from 0.5 micron to 5 mm.

The host material may have a mechanical hardness that is less than (Shore A scale) a mechanical hardness of the plurality of optical elements (upper levels of Mohs scale).

The plurality of particles may have a specific shape and/or aspect ratio specific for an optical and/or non-optical function.

The article may further comprise a plurality of microcapsules in the surface of the coating.

The coating may have a refractive index distribution.

The plurality of optical elements may be oriented to form a quasi-continuous optical surface.

Each optical element of the plurality of optical elements may be a three-dimensional element, wherein the three-dimensional element may be chosen from a lens, a platelet, a cube, a cuboid, a prism, a sphere, a pyramid, a cylinder, and a cone.

Each optical element of the plurality of optical elements may have a coating on at least a portion of a surface of the optical element. The coating may be chosen from antireflective, reflective, transparent electrically conductive, oleophobic, hydrophobic, superhydrophobic, smudge resistant, cleanable or self-cleanable, antifungal, antibacterial, antiviral, and combinations thereof.

Each optical element of the plurality of optical elements may be made from a material chosen from glass, synthetic minerals, minerals, optical polymers, micro-capsules, and other optical materials.

Each optical element of the plurality of optical elements may have at least one surface chosen from flat, curved, and textured.

The at least one surface of each optical element may include nanoparticles, nanorods, nanospears, and combinations thereof.

The host material may have a refractive index that matches to the plurality of the optical elements, the substrate, or both.

In another aspect, there is disclosed a method of making an article including depositing, on a substrate, a coating including a plurality of particles dispersed in a host material; and embedding a plurality of optical elements on a surface of the coating.

Additional features and advantages of various embodiments will be set forth, in part, in the description that follows, and will, in part, be apparent from the description, or can be learned by the practice of various embodiments. The objectives and other advantages of various embodiments will be realized and attained by means of the elements and combinations particularly pointed out in the description herein.

### DETAILED DESCRIPTION OF THE INVENTION

For simplicity and illustrative purposes, the present disclosure is described by referring to examples thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Additionally, the elements depicted in the accompanying figures may include additional components and some of the components described in those figures may be removed and/or modified without departing from scopes of the present disclosure. Further, the elements depicted in the figures may not be drawn to scale and thus, the elements may have sizes and/or configurations that differ from those shown in the figures. Any references to "top" or "bottom" are for ease of understanding positions relative to another element and should not be considered limiting. Additionally, if more than one element is present, then the element is identified as a first, second, third, etc. for ease of understanding.

In its broad and varied embodiments, disclosed herein is a coating, and an article, such as an optical device including the coating; and methods of making and using the coatings, and the articles. The article can be an optical device, for example, a glass sensor device, an inorganic solids sensor device, a polymer sensor device, a sensor window, a sensor viewport, a display (e.g., for use in personal devices like a cell phone or tablet), touch panels (e.g., ATM, airport self-check-in, hospital equipment), camera lenses on cell phones.

The present disclosure describes an article 10, including a coating 12 including a plurality of particles 14 dispersed in a host material 16; and a plurality of optical elements 18 embedded on a surface of the coating 12. The coating 12 with the embedded optical elements 18 can be an outer interface between an article 10 they are either a part of or are meant to enhance a performance of, with built-in engineerable (adjustable) features designed to protect optical and mechanical functions of the article 10 and provide various elements of safety to their users. In particular, the engineered features include mechanisms for providing enhanced scratch resistance, impact resistance, anti-smudging, water, oil and soil repellency to protect the intended pristine optical functions of the articles 10.

The article 10 can exhibit a synergy between optical and mechanical properties because of the different scales of the physical dimensions of the components in the article 10, their different mechanical properties and aspect ratios. For example, the article 10 can include hard elements, such as the plurality of optical elements 18, and pliable elements, such as a coating 12 including a host material 16. As another example, the article 10 can include physically large components, such as the plurality of optical elements 18, and physically small elements, such as a coating 12 including a plurality of particles 14, which can be nanoparticles. As a further example, the article 10 can include elements on opposite ends of a mechanical hardness spectrum, e.g., elements that are closer to the Shore A scale and other elements in the upper level of the Mohs scale.

By combining elements from opposite ends of several different parameters, an article 10 can be engineered with specific optical and functional properties. As an example, an article 10 can include scratch resistance and impact resistance. This is a significant achievement because generally scratch resistance coatings need to be mechanically hard, but the materials can be brittle thereby breaking upon impact. Conversely, a coating that provides improved impact resistance can be mechanically softer, but the materials can easily scratch.

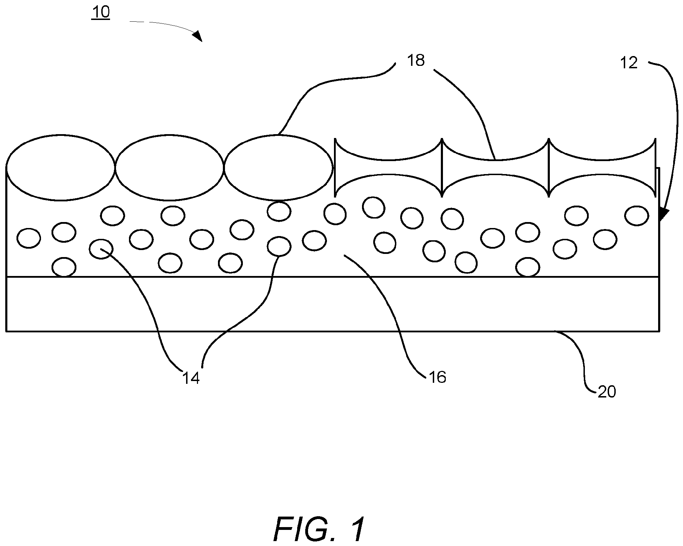

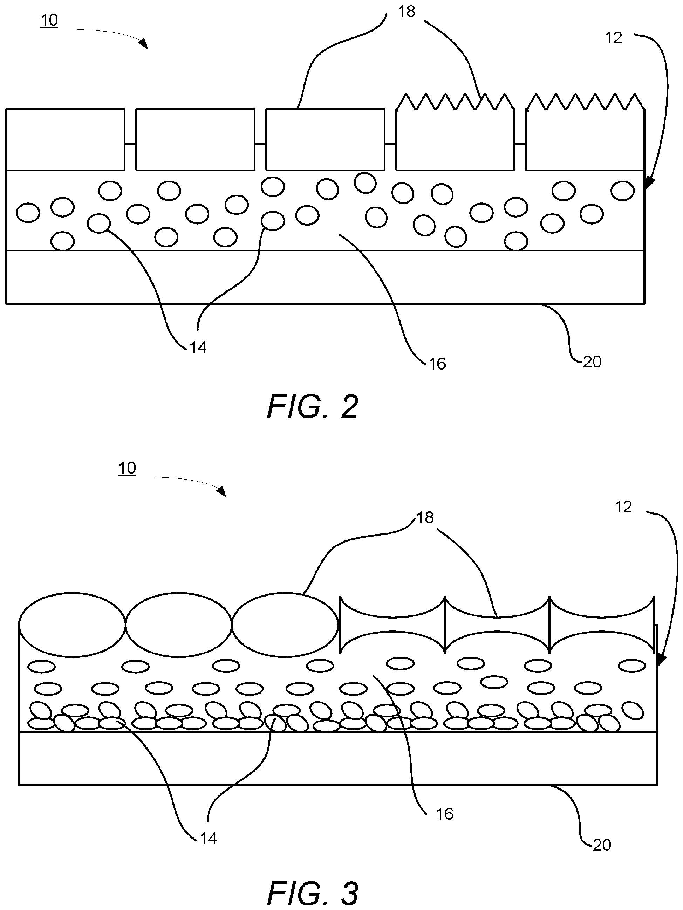

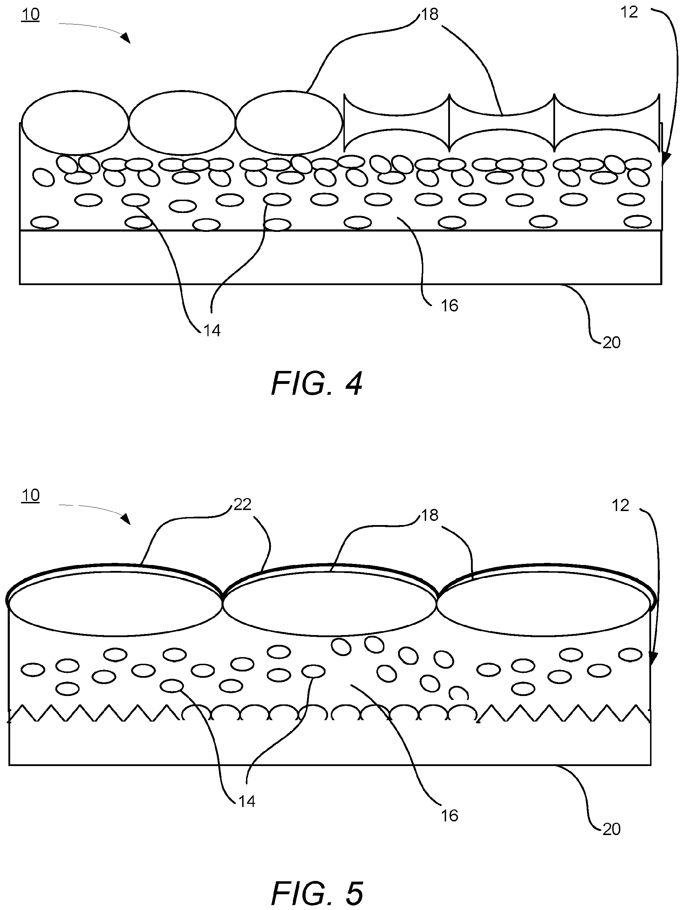

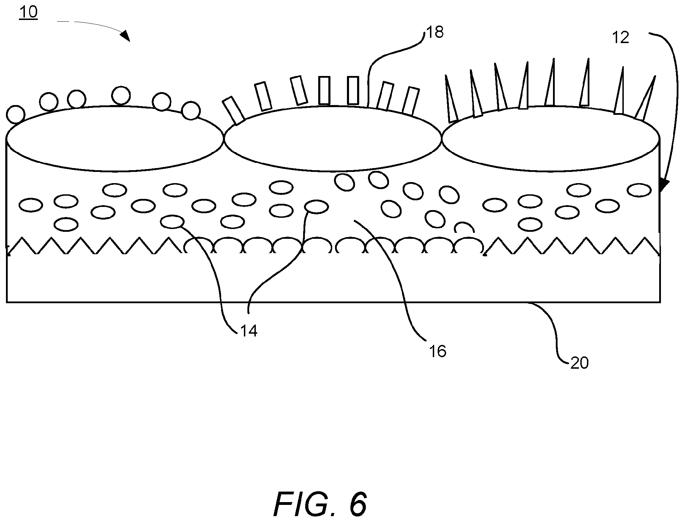

FIGs. 1-6 illustrate various aspects of the disclosed article 10. FIG. 1 illustrates an article 10 including a substrate 20 that is planar on at least one surface, such as a top surface. In an aspect, as shown in FIGs. 5 and 6, the substrate 20 can include a surface, such as a top surface that interfaces with the coating 12, including a diffractive surface. A coating 12 interfaces with a surface of the substrate 20. The coating 12 includes a plurality of particle 14, which can be randomly (FIGs. 1 and 2) or spatially oriented (FIGs. 3 and 4), within a host material 16. An optical element 18 can interface with a surface of the coating 12. For example, a first portion of the optical element 18 can be embedded within the coating 12, and a second portion of the optical element can extend above a surface of the coating 12. The optical element 18 can be present in more than one shape or form. The optical element 18 can be present across an entire surface of the coating 12. As shown in Fig. 2, the optical element 18 can be separated one from another by a gap. As shown in FIG. 2, the optical element 18 can include a diffractive surface, for example, the diffractive surface can be present on an external surface of the optical element 18. The article 10 and its elements will be described more fully below.

In an aspect, the plurality of particles 14 in the coating 12 can be selected based upon a particular shape and/or size, such as a particular aspect ratio of the particles 14 or an average particle size of the particles 14, in order to realize desired optical and non-optical functions, such as electrical conductivity, dissipation of static charge, and/or biological protection of a surface of the coating 12.

The coating 12 can have a physical thickness that depends upon the intended use of the coating 12 within the article 10. In an aspect, the coating 12 can have a physical thickness ranging from about 100 nm to about 1,000,000 nm, for example, from about 1,000 nm to about 500,000 nm, and as a further example, from about 10,000 nm to about 100,000 nm.

The coating 12 can include a host material 16. The host material 16 can be any suitable medium for enabling a distribution of the plurality of particles 14. The host material 16 can be chosen from an organic polymer, an inorganic polymer, and a composite material. Non-limiting examples of the organic polymer include thermoplastics, such as polyesters, polyolefins, polycarbonates, polyamides, polyimides, polyurethanes, acrylics, acrylates, polyvinylesters, polyethers, polythiols, silicones, fluorocarbons, and various co-polymers thereof; thermosets, such as epoxies, polyurethanes, acrylates, melamine formaldehyde, urea formaldehyde, and phenol formaldehyde; and energy curable materials, such as acrylates, epoxies, vinyls, vinyl esters, styrenes, and silanes. Non-limiting examples of inorganic polymers includes silanes, siloxanes, titanates, zirconates, aluminates, silicates, phosphazanes, polyborazylenes, and polythiazyls.

The polymer chains in the host material 16 can be crosslinked and cured. Non-limiting examples include photoinduced polymerization, such as free radical polymerization, spectrally sensitized photoinduced free radical polymerization, photoinduced cationic polymerization, spectrally sensitized photoinduced cationic polymerization, and photoinduced cycloaddition; electron beam induced polymerization, such as electron beam induced free radical polymerization, electron beam induced cationic polymerization, and electron beam induced cycloaddition; and thermally induced polymerization, such as thermally induced cationic polymerization. Non-limiting examples of a curing process include a non-radical cure system, ultraviolet light, visible light, infrared, and electron beam. In an aspect, the host material 16 can be mechanical energy dissipating.

The host material 16 can include additives, for example, in addition to the plurality of particles 14. The additives can be dispersed in the host material 16. The additives can include, but are not limited to, colorants, such as dyes and pigments; quantum dots; micelles; chalcogenides; leveling agents, such as a polyacrylate; photoinitiators, such as a phosphineoxide; an oxygen inhibition mitigation composition; a defoamer; wetting aids; dispersants; curing agent; hardener; antioxidants; and combinations thereof. The coating 12 can also include a solvent.

The plurality of particles 14 can be randomly present in the host material 16, as shown in FIGs. 1, 2, 5, and 6. In an aspect, the plurality of particles 14 can be present in the host material 16 in an ordered spatial distribution. By an "ordered spatial distribution" is meant that the plurality of particles 14 can be physically spatially distributed within the host material 16 of the coating 12 in an ordered or arranged manner. In particular, the plurality of particles 14 can be subjected to a force that orders the plurality of particles 14 in a particular physical spatial distribution within the host material 16 of the coating 12.

In an aspect, the ordered spatial distribution can be a continuous gradient throughout the host material 16 of the coating 12. For example, a physical concentration of the plurality of particles 14 can taper between surfaces of the coating 12 thereby forming a continuous gradient throughout the coating 12, as shown in FIGs. 3 and 4. FIG. 3 illustrates high refractive index particles 14 that index match with the substrate 20. FIG. 4 illustrates high refractive index particles 14 that index match with the optical elements 18. In an aspect, the continuous gradient can be spherical, axial, or radial. Because the continuous gradient can be within the host material 16 of the coating 12, a cheaper and/or thinner coating 12 can be obtained. This can be an advantage as compared to articles including multiple layers to provide a refractive index gradient across the multiple layers as opposed to within a coating 12, like the disclosed coating 12. The coating 12 can have a refractive index distribution from a top surface to a bottom surface, or vice versa. In this manner, the particles 14 in the host material 16 can be engineered in a gradient to match, such as a refractive index match, the substrate 20 and/or the optical elements 18.

The plurality of particles 14 can include any particles having an average particle size ranging in the nanometers, e.g., from about 1 nm to submicron size (less than a micron). In an effort to avoid light scattering, an average particle size of the plurality of particles 14 can be adapted to a select wavelength. The plurality of particles 14 has a specific shape and/or aspect ratio specific for an optical and/or non-optical function. As an example of a non-optical function, the plurality of particles 14 can provide low surface energy, which can result in superhydrophobicity. In an aspect, the particles 14 can be spherical in shape. In another aspect, the particles 14 can each be lamellar in shape, for example, with an aspect ratio from about 2:1 to 10:1 length to width.

The particles 14 can include a material chosen from metals, metal oxides, metal carbonates, metal sulfides, metal fluorides, metal nitrides, organic compounds or polymers, and mixtures thereof. Non-limiting examples of metal oxides includes aluminum oxide, calcium oxide, cerium oxide, chromium oxide, cobalt oxide, copper oxide, iron oxide, lead oxide, magnesium oxide, nickel oxide, niobium oxide, silicon dioxide, silver oxide, tin oxide, and zinc oxide. Non-limiting examples of metal sulfides include barium sulfide, cobalt sulfide, copper sulfide, iron sulfide, manganese sulfide, nickel sulfide, silver sulfide, tin sulfide, titanium sulfide, and zinc sulfide. Non-limiting examples of metal fluorides include aluminum fluoride, barium fluoride, calcium fluoride, cerium fluoride, chromium fluoride, cobalt fluoride, copper fluoride, gold fluoride, iron fluoride, magnesium fluoride, nickel fluoride, niobium fluoride, silver fluoride, tin fluoride, and titanium fluoride. Non-limiting examples of organic compounds or polymers include polyimidothiethers, polyphosphonates, sulfur-containing polyimide, polyferrocenes, polyferrocenylsilanes, and organic-inorganic nanocomposites. The particles 14 can include a magnetic and/or a ferromagnetic material.

The particles 14 can have a refractive index, such as a high refractive index or a low refractive index. A particle 14 with a high refractive index is defined herein as greater than about 1.65. A particle 14 with a low refractive index is defined herein as about 1.65 or less. Non-limiting examples of a high refractive index particle 14 include aluminum oxide (Al₂O₃), zinc sulfide (ZnS), zinc oxide (ZnO), zirconium oxide (ZrO₂), titanium dioxide (TiO₂), diamond-like carbon, indium oxide (In₂O₃), indium-tin-oxide (ITO), tantalum pentoxide (Ta₂0₅), cerium oxide (CeO₂), yttrium oxide (Y₂O₃), europium oxide (Eu₂O₃), iron oxides such as (II)diiron(III) oxide (Fe₃O₄) and ferric oxide (Fe₂O₃), hafnium nitride (HfN), hafnium carbide (HfC), hafnium oxide (HfO₂), lanthanum oxide (La₂O₃), magnesium oxide (MgO), neodymium oxide (Nd₂O₃), praseodymium oxide (Pr₆O₁₁), samarium oxide (Sm₂O₃), antimony trioxide (Sb₂O₃), silicon, silicon monoxide (SiO), selenium trioxide (Se₂O₃), tin oxide (SnO₂), tungsten trioxide (WO₃), combinations thereof, and the like. Non-limiting examples of a low refractive index particle 14 include silicon dioxide (SiO₂), magnesium fluoride (MgF₂), aluminum fluoride (AlF₃), cerium fluoride (CeF₃), lanthanum fluoride (LaF₃), sodium aluminum fluorides (e.g., Na₃AlF₆ or Na₅Al₃F₁₄), neodymium fluoride (NdF₃), samarium fluoride (SmF₃), barium fluoride (BaF₂), calcium fluoride (CaF₂), lithium fluoride (LiF), ytterbium fluoride (YbF₃,), yttrium fluoride (YF₃), hollow core particles and micro- and nanosized capsules (containing air and/or functional material), and combinations thereof.

The plurality of particles 14 can include particles, as disclosed above, that are the same or different. For example, the plurality of particles 14 can be the same material, the same refractive index, the same density, etc. The plurality of particles 14 can be different so that the plurality of particles 14 is a mixture of different parts. For example, the plurality of particles 14 can include a first part of magnetic particles 14, and a second part of non-magnetic particles 14.

The coating 12 can also include a plurality of microcapsules in a surface of the coating 12. In the event of a scratch in the coating 12, the plurality of microcapsules can rupture to fill a void in the coating 12 due to the scratch. The coating 12 can be polymerized so that the coating 12 cures. In this manner, the coating 12 can be considered self-healing. The host material 16 can include an active material, such as the microcapsules, or an elastic material phase, to provide self-healing.

In an aspect, the host material 16 can have a mechanical hardness that is less than (Shore A scale) a mechanical hardness of the plurality of optical elements 18 (upper levels of Mohs scale). The host material 16 can include a refractive index that can match a plurality of optical elements 18, the substrate 20, or both.

The article 10 can also include a substrate 20. The coating 12 can be applied on a surface of the substrate 20, as shown in FIG. 1. The substrate 20 can be any material capable of receiving the coating 12. For example, the substrate 20 can be plastic, glass, a web. A surface of the substrate 20 can be smooth and/or planar (FIGs. 1-4) or can be diffractive (FIGs. 5-6). In an aspect, the substrate 20 can be chosen from a display, a sensor (e.g., glass, inorganic solids, polymer), sensor window, viewport, and a diffuser. For example, the substrate 20 can be a planar glass lens. As another example, the substrate 20 can be an engineered diffuser.

The plurality of optical elements 18 can each independently have a size ranging from 0.5 micron to 5 mm, for example, from about 1 micron to about 3 mm, and as a further example, from about 5 microns to about 1 mm.

A plurality of optical elements 18 can be embedded on a surface of the coating 12. In an aspect, a portion of each optical element 18 can be embedded a depth into the coating 12, so that another portion of each optical element 18 extends beyond the surface of the coating 12. The plurality of optical elements 18 can be oriented to form a quasi-continuous optical surface, for example, as shown in FIG. 5. In an aspect, the plurality of optical elements 18 can include a first portion oriented in a first direction, and one or more additional portions oriented in one or more directions different from the first direction. In another aspect, the plurality of optical elements 18 can all be oriented in a same direction.

Each optical element of the plurality of optical elements 18 can be a three-dimensional element chosen from a lens, a platelet, a cube, a cuboid, a prism, a sphere, a pyramid, a cylinder, and a cone. In an aspect, the plurality of optical elements 18 can be a same three-dimensional element. In another aspect, the plurality of optical elements 18 can be different three-dimensional elements.

Each optical element of the plurality of optical elements 18 can have at least one surface chosen from flat, curved, and textured. FIG. 1 illustrates two different optical elements 18, one set of optical elements 18 has an oval or ellipse shape, and another set of optical elements 18 has two concave surfaces. FIG. 2 illustrates one set of optical elements 18 with flat, planar surface, and another set of optical elements 18 has one flat, planar surface, and one textured surface. In an aspect, as shown in FIG. 6, at least one surface of each optical element 18 can include nanoparticles, nanorods, nanospears, and combinations thereof. At least one surface of each optical element 18 can be a diffusing surface. At least one surface of each optical element 18 can be surface engineered into an optical metasurface.

Each optical element of the plurality of optical elements 18 can be made of a transparent material, such as glass, synthetic minerals, minerals, optical polymers, micro-capsules, or other optical materials. A micro-capsule can contain functional liquids impacting self-healing properties, light absorption, and/or refraction characteristics. In this manner, a micro-capsule can have mechanical and optical functions.

Each optical element of the plurality of optical elements 18 can have a coating 22 on at least a portion of a surface of each optical element 18, as shown in FIG. 5. The coating 22 can be chosen from antireflective, reflective, transparent electrically conductive, oleophobic, hydrophobic, superhydrophobic, smudge resistant, cleanable or self-cleanable, antifungal, antibacterial, antiviral, and combinations thereof. The coating 22 can be an optical coating, or a functional coating, for example, providing radiation and/or heat management. In an aspect, an optical element 18 can have an integrated filter design providing functions, such as notch, bandpass, or visible color functions. For example, an optical notch filter can provide performance for LIDAR windows for use in autonomous cars, drones, etc.

As shown in FIG. 6, a surface of the optical elements 18 can include nanoparticles, nano-rods, and/or nanospears which can provide antifungal, antibacterial, and antiviral properties to the optical elements 18. They can be made of materials such as copper, silver, phosphomolybdate, graphene, reduced graphene oxide, polyoxometalates, and metal oxides such as copper oxide or zinc oxide.

A method of making an article 10 can include depositing, on a substrate 20, a coating 12 including a plurality of particles 14 dispersed in a host material 16; and embedding a plurality of optical elements 18 on a surface of the coating 12. The coating 12 can be deposited using a liquid coating process.

### EXAMPLE

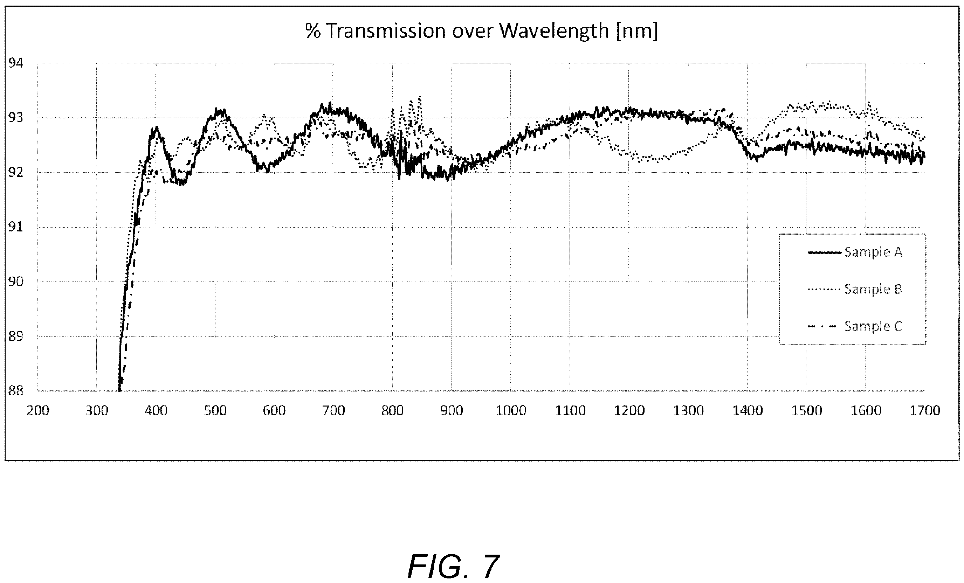

A 1 micron coating including a plurality of silicon carbide nanoparticles dispersed in a host material of epoxy was applied to a Gorilla glass substrate (Sample A). The same coating, as Sample A, was applied at a thickness of 2 microns to a Gorilla glass substrate (Sample B). Additionally, the same coating, as Sample A, was coated on a layer of silicon dioxide, which was on top of Gorilla glass (Sample C). The optical transmission of incident light was measured and the results shown in FIG. 7 The data illustrated that a combination of a host material with a plurality of particles dispersed therein exhibited high optical transmission.

An article, comprising: a coating including a plurality of particles dispersed in a host material; and a plurality of optical elements embedded on a surface of the coating. The article, further comprising, a substrate, wherein the coating is on a surface of the substrate; and wherein the substrate is chosen from a display, a sensor (glass, inorganic solids, polymer), sensor window, viewport, and a diffuser. The article, wherein the plurality of particles has an average particle size ranging in the nanometers; and wherein the plurality of optical elements has a size ranging from 0.5 micron to 5 mm. The article, wherein the host material has a mechanical hardness that is less than (Shore A scale) a mechanical hardness of the plurality of optical elements (upper levels of Mohs scale). The article, wherein the plurality of particles has a specific shape and/or aspect ratio specific for an optical and/or non-optical function. The article, further comprising, a plurality of microcapsules in the surface of the coating. The article, wherein the coating has a refractive index distribution. The article, wherein the plurality of optical elements is oriented to form a quasi-continuous optical surface. The article, wherein each optical element of the plurality of optical elements is a three-dimensional element chosen from a lens, a platelet, a cube, a cuboid, a prism, a sphere, a pyramid, a cylinder, and a cone. The article, wherein each optical element of the plurality of optical elements has a coating on at least a portion of a surface of the optical element; and wherein the coating is chosen from antireflective, reflective, transparent electrically conductive, oleophobic, hydrophobic, superhydrophobic, smudge resistant, cleanable or self-cleanable, antifungal, antibacterial, antiviral, and combinations thereof. The article, wherein each optical element of the plurality of optical elements is made from a material chosen from glass, synthetic minerals, minerals, optical polymers, micro-capsules, and other optical materials. The article, wherein each optical element of the plurality of optical elements has at least one surface chosen from flat, curved, and textured. The article, wherein the at least one surface of each optical element includes nanoparticles, nanorods, nanospears, and combinations thereof. The article, wherein the host material has a refractive index that matches to the plurality of the optical elements, the substrate, or both.

From the foregoing description, those skilled in the art can appreciate that the present teachings can be implemented in a variety of forms. Therefore, while these teachings have been described in connection with particular embodiments and examples thereof, the true scope of the present teachings should not be so limited. Various changes and modifications can be made without departing from the scope of the teachings herein.

This scope disclosure is to be broadly construed. It is intended that this disclosure disclose equivalents, means, systems and methods to achieve the devices, activities and mechanical actions disclosed herein. For each device, article, method, mean, mechanical element or mechanism disclosed, it is intended that this disclosure also encompass in its disclosure and teaches equivalents, means, systems and methods for practicing the many aspects, mechanisms and devices disclosed herein. Additionally, this disclosure regards a coating and its many aspects, features and elements. Such a device can be dynamic in its use and operation, this disclosure is intended to encompass the equivalents, means, systems and methods of the use of the device and/or optical device of manufacture and its many aspects consistent with the description and spirit of the operations and functions disclosed herein. The claims of this application are likewise to be broadly construed. The description of the inventions herein in their many embodiments is merely exemplary in nature and, thus, variations that do not depart from the gist of the invention are intended to be within the scope of the invention. Such variations are not to be regarded as a departure from the spirit and scope of the invention.

## Claims

1. An article, comprising:
a coating including a plurality of particles dispersed in a host material; and
a plurality of optical elements embedded on a surface of the coating.

2. The article of claim 1, further comprising, a substrate, wherein the coating is on a surface of the substrate; and
wherein the substrate is chosen from a display, a sensor (glass, inorganic solids, polymer), sensor window, viewport, and a diffuser.

3. The article of claim 1 or claim 2, wherein the plurality of particles has an average particle size ranging in the nanometers; and wherein the plurality of optical elements has a size ranging from 0.5 micron to 5 mm.

4. The article of any of claims 1 to 3, wherein the host material has a mechanical hardness that is less than (Shore A scale) a mechanical hardness of the plurality of optical elements (upper levels of Mohs scale).

5. The article of any of the preceding claims, wherein the plurality of particles has a specific shape and/or aspect ratio specific for an optical and/or non-optical function.

6. The article of any of the preceding claims, further comprising, a plurality of microcapsules in the surface of the coating.

7. The article of any of the preceding claims, wherein the coating has a refractive index distribution.

8. The article of any of the preceding claims, wherein the plurality of optical elements is oriented to form a quasi-continuous optical surface.

9. The article of any of the preceding claims, wherein each optical element of the plurality of optical elements is a three-dimensional element chosen from a lens, a platelet, a cube, a cuboid, a prism, a sphere, a pyramid, a cylinder, and a cone.

10. The article of any of the preceding claims, wherein each optical element of the plurality of optical elements has a coating on at least a portion of a surface of the optical element; and
wherein the coating is chosen from antireflective, reflective, transparent electrically conductive, oleophobic, hydrophobic, superhydrophobic, smudge resistant, cleanable or self-cleanable, antifungal, antibacterial, antiviral, and combinations thereof.

11. The article of any of the preceding claims, wherein each optical element of the plurality of optical elements is made from a material chosen from glass, synthetic minerals, minerals, optical polymers, micro-capsules, and other optical materials.

12. The article of any of the preceding claims, wherein each optical element of the plurality of optical elements has at least one surface chosen from flat, curved, and textured.

13. The article of claim 12, wherein the at least one surface of each optical element includes nanoparticles, nanorods, nanospears, and combinations thereof.

14. The article of any of the preceding claims, wherein the host material has a refractive index that matches to the plurality of the optical elements, the substrate, or both.
